# EUROPEAN PATENT APPLICATION

(11) **EP 1 372 349 A1**
(43) Date of publication of application: **17.12.2003**
(21) Application number: 02360168.5
(22) Date of filing: 11.06.2002
(51) Int. Cl.: H04Q 7/38

(54) **Radio access network architecture and paging method**

(71) Applicant: ALCATEL, 75008 Paris (FR)
(72) Inventor: Diaz Cervera, José, 70435 Stuttgart-Zuffenhausen (DE); Venken, Kristiaan Johan Hubert, 2970 Schilde (BE); Sigle, Rolf, 71384 Weinstadt (DE); Gomez Vinagre, Ignacio, 2000 Antwerpen (BE)
(74) Representative: Schultenkämper, Johannes

(57) **Abstract**

In an evolved radio access network (RAN) architecture user planes (UP) and the control planes (CP) are separated into different network elements. This concept is improved by further splitting the control plane (CP) in mobile specific control functions and area specific (cell and multi-cell) control functions, the proposed method comprising the steps of processing paging and broadcast functional tasks on the control plane of at least one of the radio network controlling elements resulting from this split, processing mobile control functional tasks on the control plane of at least one other radio network controlling element resulting from the split, processing the paging and broadcast functional tasks in a first and a second logical block, the first logical block performing paging tasks which are related to core network defined areas and the second logical block performing paging tasks for radio access network defined areas.

Thus a new solution of radio access network design is presented, in particular a split of the control plane entities with respect to paging and broadcasting tasks. Basically for location management purposes a first and a second functional block are introduced. The first block, called RAN related paging and broadcasting function, is managing paging tasks which are related to core network defined areas. The second block, called CN related paging and broadcasting function, is managing paging tasks for radio access network defined areas of at least one radio cell, i.e. cell, cells or so-called URA.

## Description

### Background of the invention

The present invention relates to a method for location management in a radio access network and network elements therefor.

The architecture and the design of modern radio access networks, such as UTRAN (UMTS terrestrial radio access networks; UMTS: Universal Mobile Telecommunications System) are becoming more and more complex. The overall mobile radio systems have a lot of different entities, devices and components, namely user terminals, radio base stations, at least one radio network controller for controlling a cluster of radio base stations, and switching devices, such as a mobile switching center for establishing circuit-switched connections to public switched telephone networks (PSTN) or the like. Also routers for establishing packet-switched connections to IP based networks, esp. to the world wide web, may be installed as well.

Basically the base stations and the radio network controller are constituting the radio access network which is also referred to as RAN. The switching devices are constituting the so-called core network. The interface between the RAN and the core network is quite complex, in the case of UTRAN a so-called lu interface is used as being defined by the document 3GPP TS 25.410 having the title "UTRAN lu Interface: general aspects and principles". There a so-called RANAP protocol (Radio Access Network Application Protocol) is used as defined in 3GPP TS 25.413 "UTRAN lu interface RANAP signaling".

The RAN is providing mobile radio services to a wide geographical area which is divided into a multiplicity of radio cells. Every cell is controlled by a base station, and each base station controls at least one radio cell. In the UTRAN which is operating in accordance with the UMTS standard the base stations are referred to as node B. The base stations support the connection establishment to the terminals and establish the connections to a plurality of terminals in a radio cell. The connection has the form either of a permanent connection for the transmission of circuit switched data or a non-permanent connection for the transmission of packet switched data. The data signals transmitted via the connection are representing all kind of communication data, such as voice, audio, text, video data or other kinds of user data.

The network elements for controlling the radio cell clusters are the radio network controllers, also referred to as RNC. Each RNC is assigned to a plurality of base stations, typically up to few hundred base stations. The RNC performs for example the radio resource management and the terrestrial resource management of a radio cell cluster. In particular, the RNC controls transmission power on radio bearers, handovers (transfer of a terminal from one radio cell into another) as well as the macro diversity mode .

The RNC is connected via interfaces to the other network elements. In UMTS this means that a RNC comprises at least one lu-interface to a core network, possibly one or several lur-interface to other RNCs, at least one lub interface to a base station (e.g. to a Node B), and at least one logical interface to a terminal UE which runs physically across the lub-interface or the lub and lur interfaces .

In the existing radio access networks, such as the conventional UTRAN, all control and user plane information relative to a particular user terminal or to a certain area is exchanged via the lu interface between the core network and the radio network controller, which is the serving controller for this user terminal. In an evolved UTRAN, it is foreseen that the radio network controller is split into its control and user planes, which are located in different network elements, herein also called radio network controlling elements.

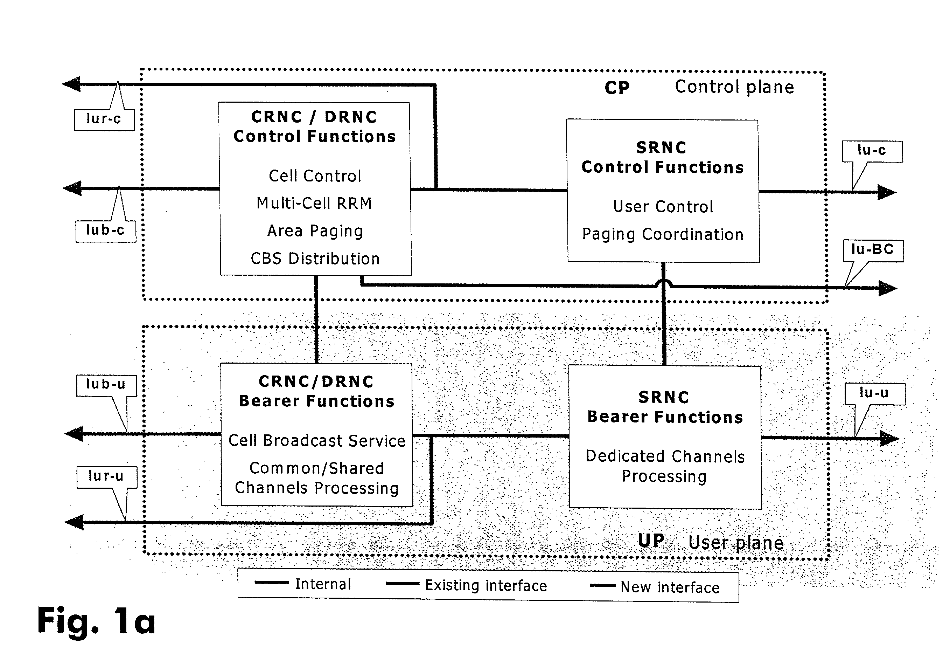

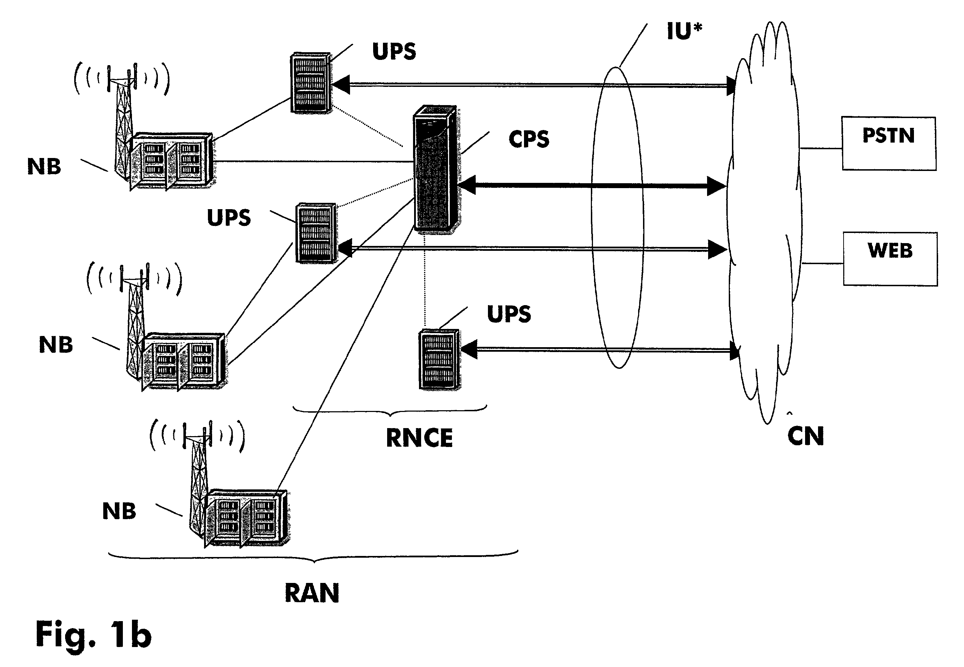

The principle of this clear separation between the control and user planes is shown in the Figures 1a and 1b. The user plane functions which basically contain all the channel processing, e.g. header compression, radio frame delivery acknowledgement, channel multiplexing and macro-diversity combining, are performed by user plane servers UPS. The control plane functions which mainly encompasses all signaling related processing for the application protocols, such as NBAP (Node B Application Part), RNSAP (Radio Network System Application Part) and RANAP (Radio Access Network Application Part) on the RAN-CN interface, and also signaling for the radio resource control RRC of the air interface (RAN-UE interface, i.e. Uu), are performed by at least one control plane server. Both types of servers are parts of the Radio Network Controller - the so-called RNC. Thus the servers CPS and UPS are also here named as radio network controlling elements RNCE.

The separation of user plane and control plane allows to separately scale both planes, what results in turn in a better scalability for the whole system. However, this separation also implies a higher number of hardware elements resulting in a higher number of external interfaces; some of them are new and must be defined. The split of control and user planes has also a certain impact on QoS (Quality of Service) provisioning, a problem which must be analyzed and solved in detail.

The RNCE as shown in Fig. 1b is a complex assembly of at least one control plane server CPS and at least one user plane server UPS for carrying out control or user plane functions respectively. These different types of servers perform many different and sometimes unrelated functions. This introduces extra complexity in the design of the RAN and even more of the whole mobile radio system.

If both planes are split, the lu, lur and lub interfaces are also split into their control and user plane components as can be seen from Fig. 1a. However, this does not require relevant changes in the RNC architecture, since different protocols for the control and the user plane are already used for these interfaces. The control parts of the interfaces would include the different application parts (so-called RANAP, RNSAP and NBAP), whereas the bearer parts would contain the different frame protocols.

Signaling between the RAN and the UE is also considered as belonging to the control plane. Therefore, the RRC (Radio Resource Control) protocol is terminated in the control plane, whereas layer 2 protocols (PDCP, RLC, MAC) and macrodiversity combining and splitting are located in the user plane.

### Summary of the invention

In an evolved RAN architecture as shown in Fig. 1, the user and the control planes are separated into different network elements. If a further split will be introduced in the control plane in order to separate mobile control functions from the rest of the control functions, e.g cell and multi-cell related control functions, then the functional entities responsible for the mobile control and for paging and broadcasting would not be located in the same network element. However, these entities for Mobile Control, Paging and Broadcasting shall work very efficiently, in particular they shall support well location management functions within the radio access network.

Therefore the object of the invention is to overcome the drawbacks as mentioned above and to present a new and advantageous method for location management and also new network elements for performing that method.

The object is solved by a method having the features of claim 1. Accordingly the user functions are split from the control functions by introducing a user plane and a control plane into the radio network controlling elements of the radio access network, the control plane being further split in mobile specific control functions and area specific (cell and multi-cell) control functions, the method comprising the steps of:
- processing paging and broadcast functional tasks on the control plane of at least one of the radio network controlling elements resulting from this split,
- processing mobile control functional tasks on the control plane of at least one other radio network controlling element resulting from the split,
- processing the paging and broadcast functional tasks in a first and a second logical block, the first logical block performing paging tasks which are related to core network defined areas and the second logical block performing paging tasks for radio access network defined areas.

There is also proposed a set of network elements to perform the said method and a radio access network comprising such a set of network elements.

The invention presents a new solution of radio access network design, in particular a split of the control plane entities with respect to paging and broadcasting tasks. Basically for location management purposes a first and a second functional block are introduced. The first block, called RAN related paging and broadcasting function, is managing paging tasks which are related to core network defined areas. The second block, called CN related paging and broadcasting function, is managing paging tasks for radio access network defined areas of at least one radio cell, i.e. cell, cells or so-called URA.

### Brief description of the drawings

The invention and the advantages resulting therefrom will become apparent from the following more detailed description of preferred embodiments. For explanation purposes some schematic drawings are added and are shown in the enclosed figures:
- Fig. 2: showing the status of entities in the core network and the terminal involved in paging procedures;
- Fig. 3: showing a functional block diagram of the radio access network according to a preferred embodiment;
- Fig. 4: showing a block diagram of tasks to be performed in the different network elements of the radio access network according to the invention;
- Fig. 5: showing a block diagram of the radio access network according to a further embodiment;
- Fig. 6: showing a flow chart of a subroutine for paging according to the method of the invention;
- Fig. 7: showing a flow chart of a subroutine for location and routing area updating according to the method of the invention;
- Fig. 8: showing a flow chart of a subroutine for paging of an user terminal when in idle mode according to the method of the invention;
- Fig. 9: showing a flow chart of a subroutine for dedicated paging in a distributed radio access network;
- Fig. 10: showing a flow chart of a subroutine for UTRAN registration areaURA- paging in a distributed radio access network.

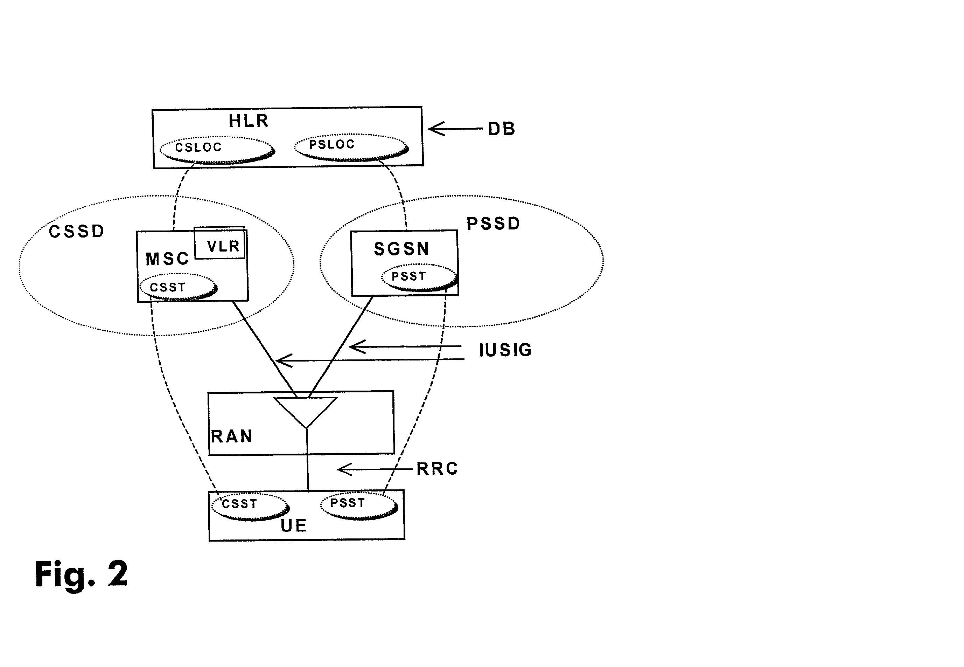

In Fig. 2 there is shown from a logical point of view, the concept of core network initiated paging by illustrating two state machines in parallel, both being assigned to the service domains of the network, one of them being a circuit switched service domain CSSD (also named PSTN/ISDN domain), the other one being a packet switched service domain PSSD (also named IP domain). Thus each service domain has its own service state machine. A mobile terminal UE, that is supporting both services, has a circuit switched service state machine CSST and a packet switched service state machine PSST. The two peers of the service state machines are working independently to each other, although associated to the same terminal UE (also named user equipment). The signaling between the terminal and the core network aims to keep the peer entities synchronized.

For both core network domains CSSD or PSSD, the terminal UE may either be in a DETACHED, IDLE or CONNECTED mode. If the terminal UE is IDLE in one of the domains, it is tracked based on Location Areas (LA) in the CSSD or Routing Areas (RA) in the PSSD. Therefore LA/RA update procedures are used which are known from UMTS as such. The location information is stored in the Home Location Register (HLR) database.

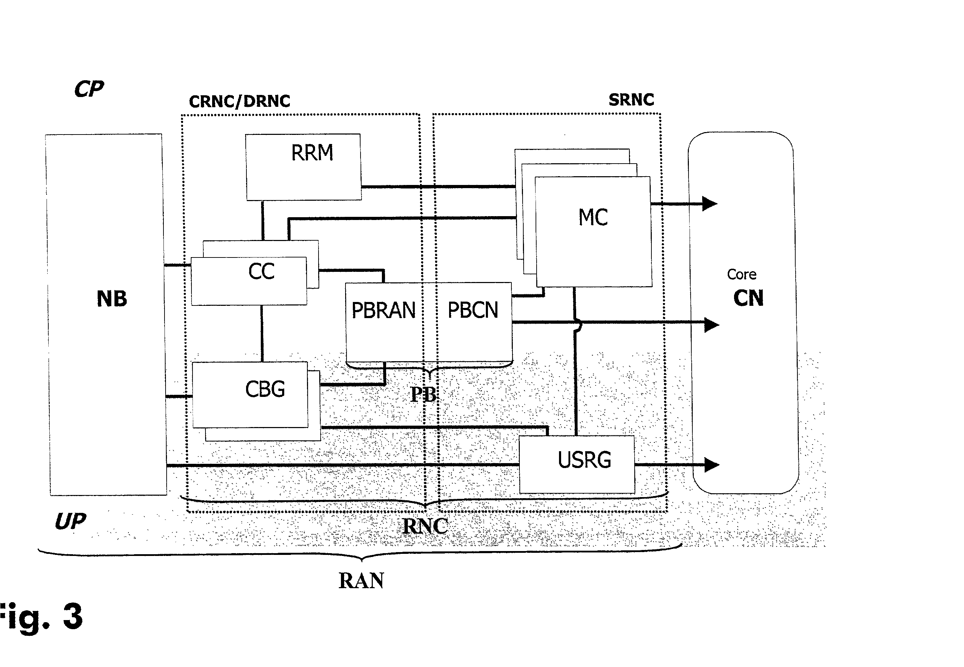

For terminals which are either in CS CONNECTED mode, PS CONNECTED mode or in both, a Radio Resource Control RRC connection exists between the terminal UE and its Serving Radio Network Controller (see SRNC in Fig. 3). Then a signaling connection is established on the lu interface (see lu-c, the control part of the lu interface, in Fig. 3) between the Serving Radio Network Controller and the corresponding core network node or nodes (see CN in Fig. 3). These nodes can either be Mobile Switching Centers MSC, Serving General Packet Radio Service Support Nodes SGSN, or both.

The RRC CONNECTED terminals, i.e. terminal being either connected to CSSD or PSSD or both are tracked inside the network UTRAN based on cell or UTRAN registration areas. Therefore the terminal UE informs its Serving Radio Network Controller about its new location.

If a terminal should be found by a core network domain in which it is idle, the corresponding domain sends a special message (RANAP PAGING message) to all Radio Network Controllers responsible for the Location Area or Routing Area. Depending on the Radio Resource Control status of the terminal UE in the other domain two main cases can be distinguished:
- CS IDLE / PS IDLE: In this case the terminal UE is RRC IDLE, i.e. no Serving Radio Network Controller (SRNC) exits for this terminal. In this case all Radio Network Controllers which receive the RANAP PAGING message try to find the terminal UE using regular paging procedure such as known from UMTS. Therefore, no Mobile Control functional entity exists for the paged user, and no context is stored in the PBCN logical block.
- CS IDLE / PS CONNECTED or CS CONNECTED / PS IDLE (IDLE/CONNECTED case): In this case the mobile terminal is RRC CONNECTED, i.e. one of the Radio Network Controllers which received the RANAP PAGING message is the Serving Radio Network Controller SRNC of this mobile terminal UE. Depending on the RRC status of the terminal UE it may not monitor the paging channel and could therefore not be reached by regular paging. Therefore the SRNC has to do some paging co-ordination which is discussed later in detail. In this case, there is a Mobile Control functional entity MC responsible for control of the terminal, and a context exists in the PBCN logical block pointing at the MC. The MC stores some context information required to provide paging coordination according to the state of the terminal UE.

If the terminal UE receives an RRC PAGING message it has to respond and as a consequence the RRC status of the terminal UE may change and further signaling follows. But this is not the main subject of the invention and therefore not described in more detail.

In addition to the described core network (see CN in Fig. 3) originated paging, the UTRAN itself may trigger the paging procedure by sending an RRC PAGING message which is handled in the same way as the second case above. In this case, paging is initiated by the SRNC in the original UTRAN architecture, and hence by the Mobile Control functional entity associated to the terminal UE.

However a specific problem arises due to the described hierarchical concept. It is that in the mixed IDLE/CONNECTED case the terminal UE may move over LA/RA area borders while it is tracked by its Mobile Control functional entity). If a new PBCN logical block is responsible for this new LA/RA a RANAP PAGING message sent by the IDLE CN domain to all RNCs (i.e. to all PBCN logical blocks) responsible for the new LA/RA would not reach the Mobile Control MC associated to the terminal, since none of the PBCNs has a stored context pointing at the MC. As a consequence of this the Mobile Control cannot do the described paging co-ordination and an terminal UE may not be reached. Therefore, an RRC CONNECTED UE can not do an LA/RA update while its Mobile Control does not change, i.e. the LA/RA stored in the HLR doesn't change even if the mobile crosses LA/RA borders. The key for this solution is that RRC CONNECTED UEs receive mobility management system information (LA/RA - Ids) on the established RRC connection from their MC while RRC IDLE UEs read this information from the system information broadcast (BCCH) of the current cell, i.e. even if the UE crosses LA/RA borders it will not be informed by its MC about the change. Hence, in the IDLE/CONNECTED case one of the PBCNs belonging to the current LA/RA has always context information pointing at the Mobile Control MC responsible for terminal control of the UE which can do the necessary paging co-ordination.

If an SRNS relocation is carried out (i.e. a new MC in a different network element becomes responsible for the terminal due to terminal movement) the new MC is responsible for sending the mobility management system information which may in turn cause a LA/RA update. In this case, one of the PBCNs in the LA/RA must be set up with a context pointing at the new MC (note that this PBCN could still be the old PBCN). This ensures again, that the IDLE CN domain contacts the correct RNC.

In order to reach a mobile user the current location of the terminal UE is stored in the mobile network. In the mobile radio access network proposed here a hierarchical concept is applied which splits the whole mobility management between the core network and the Radio Access Network UTRAN. In case of a mobile terminated call the core network locates the mobile user by querying the location databases DB which can be the Home Location Register HLR or the Visited Location Register VLR and by paging the mobile terminal UE inside its current registration/location area. In particular a new IP based architecture is proposed which splits the Radio Network Controlling Elements in several different parts. Preferably the support of several different air interface technologies is provided by a Multistandard RAN (MxRAN) architecture which is also described here, esp. in view of the impact of the proposed distributed architecture on the mobility management.

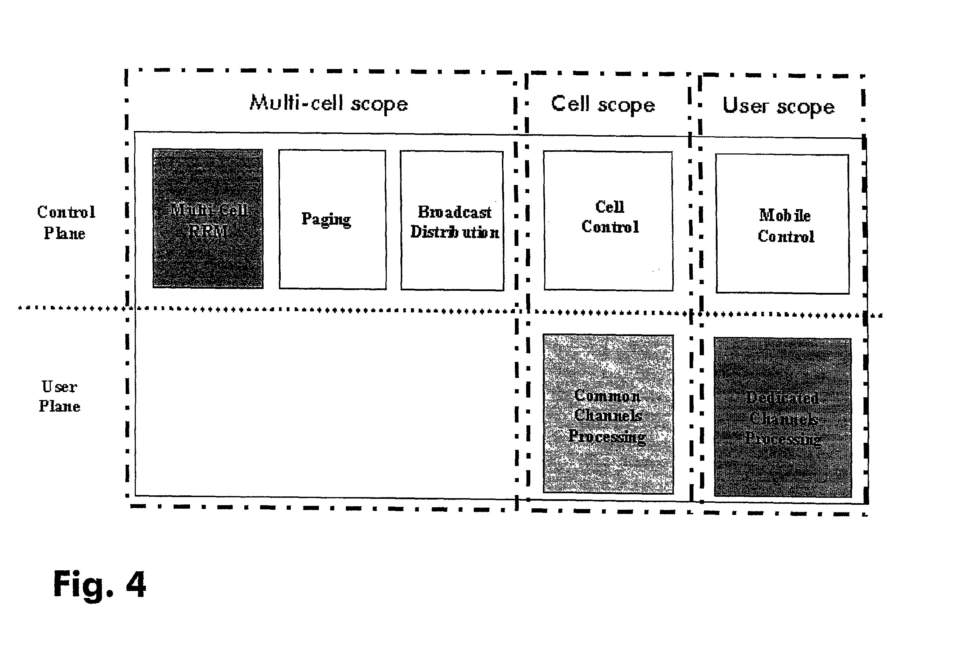

Fig. 3 and 4 are showing the main architectural principles for the split of the control and user planes and the separation of cell, multi-cell and user related functions. According to these principles, the RNC functionality in RAN is distributed across several functional entities:
- Mobile Control MC, responsible for user related functions belonging to the control plane, i.e. SRNC functions belonging to the control plane.
- User Radio Gateway USRG, responsible for user related functions belonging to the user plane, i.e. SRNC functions belonging to the user plane.
- Cell Control (CC), responsible for cell related functions belonging to the control plane, i.e. CRNC/DRNC functions related to a single cell and to the control plane
- Cell Bearer Gateway (CBG), responsible for cell related functions belonging to the user plane, i.e. CRNC/DRNC functions related to a single cell and to the user plane
- Paging and Broadcast (PB), responsible for paging coordination and for distribution of paging information and CBS messages across several cells. These functions are located in the SRNC and the CRNC.
- Radio Resource Management RRM, or even Multi-Cell Radio Resource Management responsible for radio resource management with a multi-cell view. This functional entity is part of the CRNC.

The functional split and the interconnection between the functional entities as shown in Fig. 3 is one possible solution wherein several functional entities can be bundled together in a single network element and existing UTRAN interfaces can be reused for the interconnection of the different network elements such that only a few additional interfaces are necessary. For instance, several functional entities may be co-located in one network element in the final network reference architecture, e.g. a CC, a CBG and a Node-B may be co-located, or a PB, a RRM and several CCs may be located in a single Area Control Server (ACS).

For the mobility management especially the Mobile Control MC, the Paging and Broadcast PB functions, and the Cell Control CC functions as well as the related interfaces are important. Therefore the impact of these interfaces and the separation will be discussed here. In more detail the following problems are addressed and solved:

One aspect is a paging co-ordination to be realized between the Mobile Control MC and the Paging and Broadcast PB. Another aspect is a solution so that a Cell Control CC can find the Mobile Control MC using the available information. This solution is needed e.g. in the case of cell or URA update procedures, where the CC receives a cell or URA update RRC message on the CCCH which eventually should reach the Mobile Control MC of the corresponding terminal UE.

As the Cell Control CC does not store any terminal specific information and the Mobile Control MC is dynamically instantiated, at least during RRC establishment, the Cell Control CC needs a method to discover the correct Mobile Control MC. This is done by forwarding this message to the appropriate PBCN (which is identified by reusing the SRNC-ID included in the RRC message as the PBCN identifier) of the terminal UE which stores the terminal context pointing at the appropriate MC. There are further aspects, such as when must a LA/RA area update be performed in the new architecture?

This and other questions are addressed in the following section, which gives an overview on how the different mobility management related procedures may be handled in MxRAN. Moreover, alternative approaches are discussed.

In RRC and RNSAP messages of the current UTRAN architecture the identifiers of the SRNC and of the CRNC are used to identify the corresponding network elements, the terminal identifier is used to uniquely identify a certain terminal UE inside the SRNC. The identifier of the radio cell is used to uniquely identify a certain cell inside the CRNC. Thus it is very efficient to reuse the existing RNC-ID to identify a certain Paging and Broadcasting function PB. Moreover, as the UE-ID is just unique inside a certain SRNC, the combination of the RNC-ID and the UE-ID can be used to find a certain Mobile Control function MC. Similarly, the Cell-ID together with the CRNC-ID are used to uniquely identify a Cell Control function CC.

Although a Paging and Broadcasting function PB is a single functional element it has two different logical roles. This functional split is shown in Fig. 3:

The core network CN related Paging and Broadcasting part, as shown in the block PBCN, is responsible for the CN defined areas (i.e. LA, RA) and is contacted by the CN when the CN initiates paging. Therefore the PBCN together with the Mobile Control MC are responsible for doing the paging co-ordination.

The RAN related Paging and Broadcasting part, as shown in block PBRAN, which is responsible for the RAN related areas (i.e. URA, Cell) is contacted by the Mobile Control MC if paging related to Radio Registration Area tasks (URA paging) or Radio Cell tasks (Cell paging) should be carried out.

Furthermore, each part of the PB is responsible for a certain number of Cell Control CC and each CC belongs to one LA, to one RA, and to one or more URAs. Therefore a P&B is at least responsible (among others) for the LA/RA/URA(s) a CC belongs to.

In order to understand in more detail the different roles of the Radio Network Control Elements SRNC, CRNC and DRNC in view of the split of the PB function into a first block PBCN and a second block PBRAN, these functions shall be described in even more detail as follows:

The first block PBCN is part of the radio network controller RNC as such whereas the mobile control MC function and the user radio gateway USRG are part of the serving radio network controller SRNC. The PBCN can not properly be considered as a part of the SRNC or the CRNC because its first task when it receives a paging request from the core network is to determine whether a context exists for the paged terminal. In this case, it would be part of the serving radio network controller SRNC responsible for the connected user. Otherwise, it would be part of a controlling radio network controller CRNC responsible for cells in the LA/RA. The second block PBRAN is part of the controlling radio network controller CRNC, which is also either the serving radio network controller SRNC responsible for the connected terminal or a so-called drift radio network controller DRNC, in this controller mainly the area specific (cell and multi-cell) related functions such as common radio resource management CCRM, cell control CC and cell bearer gateway CBG functions are processed.

Fig. 4 is showing a functional split of these and other functions to be performed either on the control plane or on the user plane.

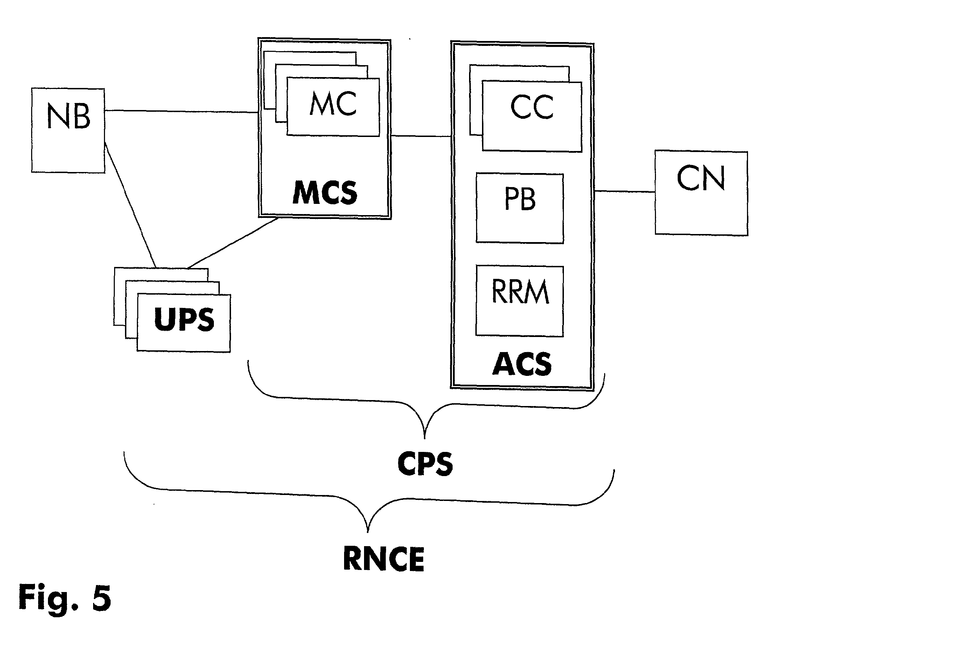

A network design oriented split is shown in Fig. 5 in which two different network elements, namely a mobile control server MCS and an area control server ACS are shown. Both entities are belonging to the control plane and are representing a functional assembly comparable to the single control plane server CPS as shown in Fig. 2.

In the mobile control server MCS as shown in Fig. 4 the mobile control MC functions for a number of mobile terminals are gathered together. The cell control CC functions for several radio cells, the overall paging and broadcast PB function and the common radio resource management RRM are integrated into the area control server ACS.

User plane related functions are integrated into user plane servers UPS which are closely located to the respective base stations (Node Bs). The user plane functions perform all radio processing associated with layer2 (L2) protocols, i.e. they perform the PDCP (packet data convergence protocol), the RLC (radio link control) and MAC (medium access control) protocols. The BMC layer, responsible for the transmission of cell broadcast service messages in a particular cell is also located in the UPS, as well as the macrodiversity combining and splitting unit used for soft handover, which is considered as an upper sublayer of the physical layer.

But the main aspect of here is the split of the control plane functions and their implementation into separate servers MCS or ACS, both representing distributed parts of a control plane server assembly CPS. This is responsible for all control related procedures, i.e. it contains the termination of the different Application Parts, such as the so-called RANAP (radio access network application part), the RNSAP (radio network system application part), and the NBAP (node B application part) used for the exchange of control information between the different network elements in the radio access network (RAN) and with the core network (CN)._{[R&l1]} The control plane CP contains also the termination of the SABP (Service Area Broadcast Protocol), which is used for the reception of cell broadcast service (CBS) messages. _{[R&l2]}Therefore, the CP is responsible for distributing CBS messages to the appropriate elements in the user plane UP, which in turn distribute internally CBS messages to the BMC (Broadcast/Multicast Control) layer entities responsible for the broadcast in each particular cell. Moreover, the CPS contains as well the RNC part of the RRC (radio resource control) protocol, used for the exchange of control information between the RAN and the mobile terminals (UEs).

In the control plane, the RANAP protocol is used for the exchange of both generic and user specific control information between the CN and the CPS. Before any user plane data can be exchanged between a CN node, e.g. a mobile switching center (MSC) or a serving GPRS support node (SGSN) and a particular UE, a dedicated lu signaling connection is established between the MCS associated to the UE and the CN node. After this connection is established, all control information related to this particular UE is exchanged between the CN node and the MC associated to the UE (located in the MCS) by means of this lu signaling connection. However, for generic control information, connectionless mode is used. Paging notifications, whose purpose is to locate a particular UE, are also considered a part of the generic control information, since no lu signaling connection exists for the paged UE towards the CN node initiating the paging procedure.

A consequence of the division of the PB functional entity in two different logical blocks, namely PBCN and PBRAN, is that in a particular paging procedure (depending on the state of the UE), a PBCN and one or several PBRANs may be involved, and each of them can be located in different ACSs.

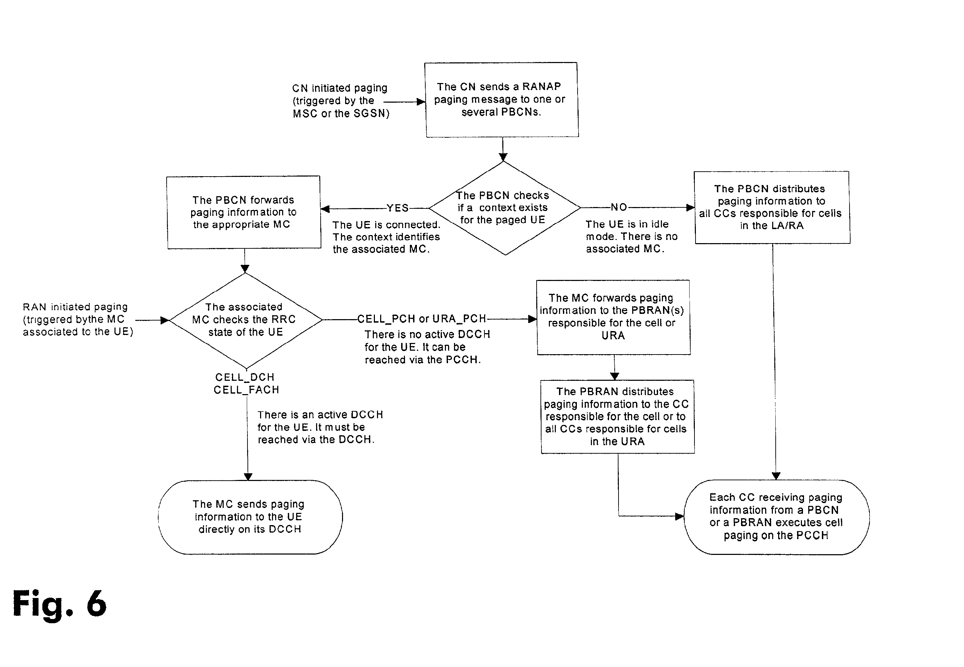

The method of paging according to the invention is shown in more detail in the Fig. 6 wherein basically two types of paging subroutines may occur:

First a so-called "CN initiated paging", i.e. a paging which is triggered by the mobile switching center or serving GPRS support node of the core network, when the terminal is idle in the CN domain initiating paging. The core network related paging and broadcast block PBCN (also see Fig. 3) is contacted to send paging signals via a paging channel to the location area LA or routing area RA of that mobile terminal. However, if the terminal is in a RRC connected state (i.e. it has an RRC connection towards its associated MC), one of the PBCNs contacted by the CN has a context for the paged terminal pointing at the associated MC, and it must forward paging information to the MC.

If the terminal is in a RRC connected mode and the terminal is in an active status (i.e. in RRC Cell_DCH or Cell-FACH states) the paging is performed by mobile control MC via the dedicated channel, e.g. the DCCH.

If the terminal is RRC connected but not active (i.e. in RRC Cell_PCH or URA_PCH states) the paging is performed via a paging channel, e.g. the PCCH. In this case the MC forwards the paging information, together with the identification of the cell or URA onto which paging should be carried out, to the radio access network related paging and broadcast block PBRAN(also see Fig. 3), which then distributes that information to corresponding CC(s) which finally send paging signals via the paging channel PCCH.

The second type of paging can be the a so-called "RAN initiated paging", i.e. a paging which is triggered by the MC associated to the terminal (which is necessarily in RRC connected state). Again the MC checks the RRC state of that terminal and goes on according to the steps explained above, i.e. DCCH paging of active terminals or PCCH paging of non-active terminals.

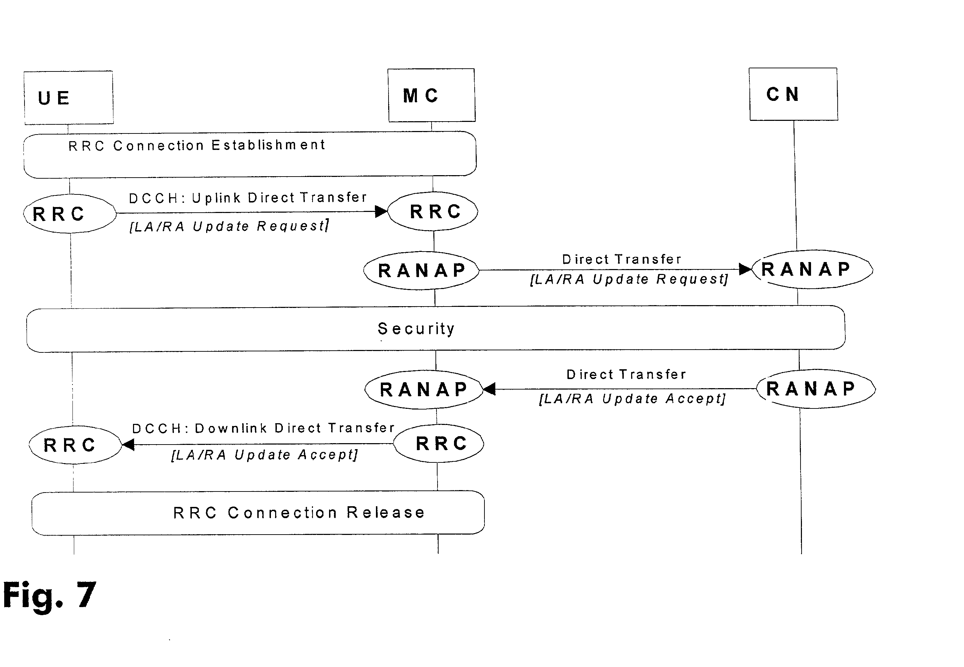

In Fig. 7 there is shown the chart of a LA/RA update procedures in MxRAN which work exactly the same as in the UTRAN architecture beside the fact that the MC functional entity carries out tasks performed by the SRNC in the original UTRAN architecture. Hence, no special adaptation is necessary for these procedures.

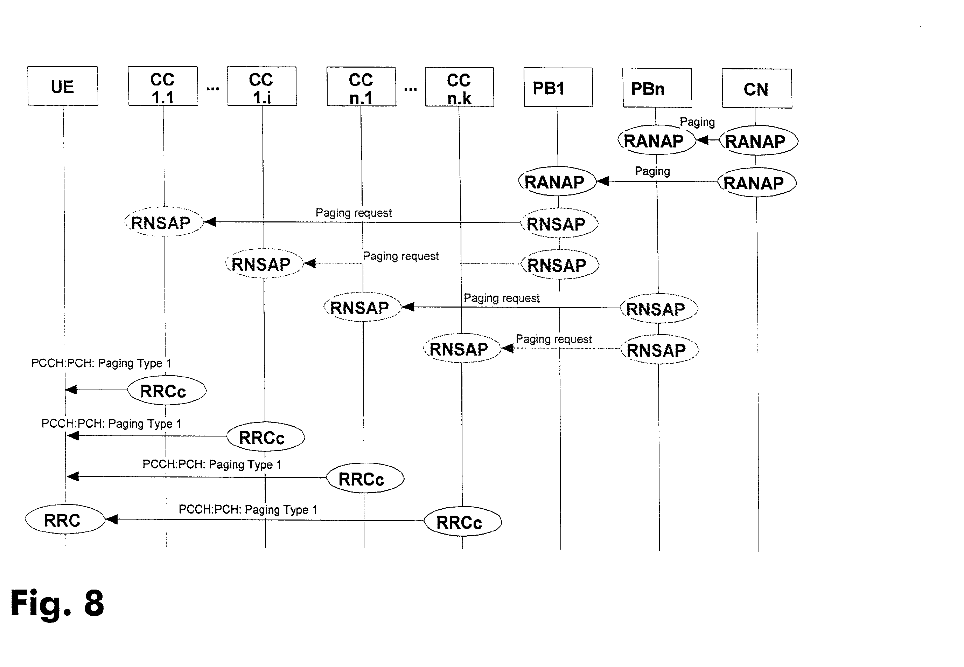

The Fig. 8 shows the subroutine for paging in a location area or routing area. If a terminal UE is in RRC IDLE mode and one of the CN domains wants to find the UE, the CN sends a RANAP paging message to all PBCN entities responsible for the corresponding LA/RA. In this case none of these entities has stored a terminal context. Hence, they proceed with the distribution of paging information to all CCs under their responsibility which belong to the requested LA/RA. This distribution is internal if the PBCN and the associated CC entities are located in the same network element i.e. the Area Control Server (ACS). In case they are not co-located, for instance because each CC functional entity is co-located with its associated Node B and not in the ACS, the distribution must be carried out externally by means of some protocol. A possible solution in this case would be to reuse the already existing RNSAP PAGING REQUEST message used on the lur interface in today's UTRAN architecture, or even a simplified version of this message. Once the CC has received paging information, it sends a PAGING TYPE 1 RRC message on the PCCH to the UE.

The procedure as shown in Fig. 8 is not more complex than that procedure defined in UMTS. The only difference is that the PBs have to contact a potentially high number of CCs (each CC is responsible for just one cell), what is handled inside the CRNC in the original UTRAN architecture. Hence, if the PBCN and the CC are separated in different network elements, this introduces additional signaling overhead and delay (one additional hop). However, if the CC (and the CBG) is co-located with the Node B, this effect is compensated or even over-compensated.

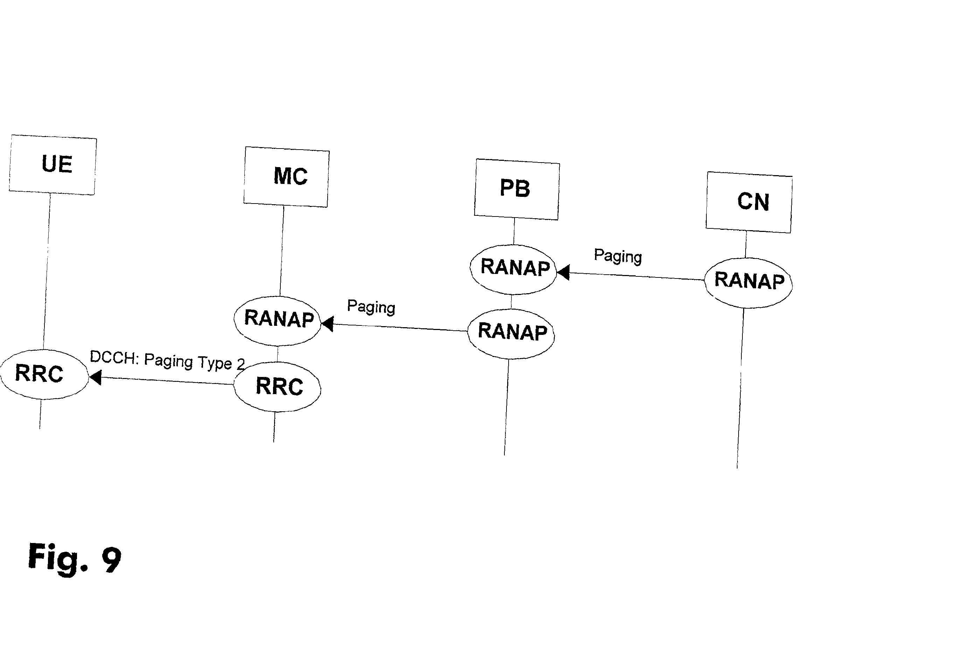

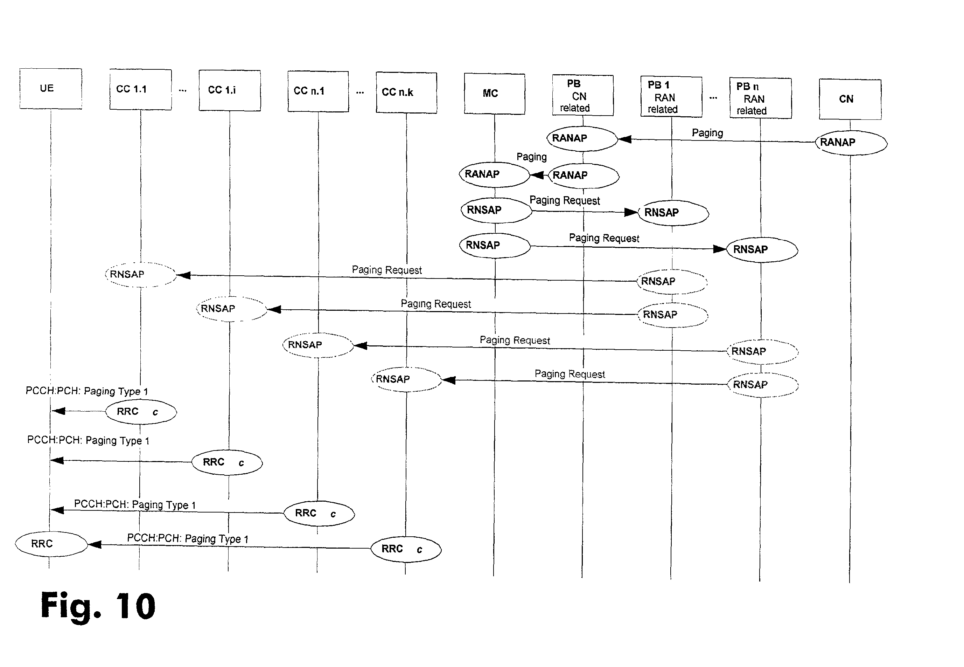

Further subroutines performed in a evolved RAN which can be a MxRAN for the paging of mobile terminals in RRC connected mode are shown in Fig. 9 and 10:

If an UE in RRC connected mode is paged by the idle CN domain, the CN sends a RANAP paging request to all PBCNs which are responsible for the corresponding LA/RA and one of these knows the MC of the UE (this relation is generated during RRC establishment). This PBCN and the MC of the mobile have to co-ordinate the paging as previously. This can be done in different ways:
- The PBCN is always updated when the RRC status of the UE changes and can therefore decide independently how to proceed.
- The PBCN just knows the mapping between the MC-ID and the corresponding network element and forwards the RANAP PAGING message to the MC which then can decide how to proceed based on the already available information.

As the overhead introduced by permanently updating the PB seems to be very high, the second approach is favored and described in the following. Two cases must be distinguished depending on the RRC status of the UE.

The first one is shown in Fig. 9. There is shown the flow chart for a dedicated Paging for UEs in Cell_FACH or Cell_DCH:

For UEs in Cell_FACH or Cell_DCH RRC state dedicated paging is used, i.e. the MC sends an RRC PAGING TYPE 2 message on the already established DCCH to the UE.

The second subroutine is shown in Fig. 10. There is shown an URA/Cell Paging for UEs in URA_PCH or Cell_PCH:

If an UE is in URA_PCH or Cell_PCH RRC state, a PAGING TYPE 1 RRC message must be sent on the PCCH of the given cell or of all cell(s) of the given URA. As the URA paging is the more complicated case it will be described in the following. Cell paging is similar, but a single cell is involved (and hence also a single PBRAN and a single CC).

The PBCN forwards the paging message to the MC of the UE. The MC knows the current URA of the UE and all responsible PBRANs for this URA and sends a RNSAP PAGING REQUEST message to all of these PBRANs which in turn forward it to all the CCs under their responsibility which belong to the URA. All the CCs then send a PAGING TYPE 1 message on the PCCH of their cells which will finally reach the UE. As in the PBCN case explained before, the distribution between a certain PB (in this case PBRAN) and the associated CCs can be internal or external depending on the location of the CCs.

This scenario assumes that the MC knows all the PBRANs responsible for the URA. Alternatively the MC could just know the ID of one PBRAN, i.e. the ID of the PB which is responsible for the CC from which the last URA update was carried out. In this case the MC would send the RNSAP PAGING message to this PB which would then be responsible for distributing the message to all other PBs responsible for the URA.

Summarizing, some context information is required in the different functional entities in the preferred embodiment of the invention.
- The CN associated paging and broadcast functional entity must have a context for RRC connected users consisting of the identification of the MC associated to the terminal (including the transport address of the network element MCS where this MC is located). This context is created during the initial RRC establishment procedure and deleted when the RRC connection is released. In case of a relocation, this context could be deleted in a PBCN functional entity and setup in a new one.
- The Mobile Control (MC) functional entity associated to a particular terminal (which must necessarily be in RRC connected state) must contain (among other information) at least the following context for the terminal:
   → The RRC status of the terminal (CELL_DCH, CELL_FACH, CELL_PCH or URA_PCH).
   → If the terminal is in CELL_PCH state: the Cell-ID of the cell were the last cell update procedure was executed, and the PBRAN-ID of the PBRAN associated with the CC responsible for the cell (this PBRAN-ID corresponding to the CRNC-id used on air interface messages and lur RNSAP messages in today's architecture)
   → If the terminal is in URA_PCH state: the URA-ID of the URA for which the last URA update procedure was carried out for the terminal and additionally either the PBRAN-ID of the PBRAN associated to the CC of the cell where the URA procedure was last executed or a complete list of the PBRAN-IDs of all PBRANs associated to CCs belonging to the URA.
- No context information is required in the PBRAN for the terminal.

Context information required in MC for the RRC CELL_PCH or URA_PCH states is updated whenever a cell or URA update procedure is carried out by the mobile terminal. In this case, the terminal sends an RRC CELL UPDATE or URA UPDATE message on the CCCH of the cell where it is located. By reusing RNC-ids for the different PBs and the SRNC-id and UE-id to identify the MC associated to the UE, the cell-ID or URA-ID and the identification of the PBRAN associated to the cell where the procedure was triggered (or all the PBRANs associated to cells in the selected URA) can be forwarded to the appropriate MC, and the confirmation of the cell or URA update is sent back from the MC to the CC and from the CC to the UE.

## Claims

1. A method for location management in a radio access network (RAN) wherein the user functions are split from the control functions by introducing a user plane (UP) and a control plane (CP) into the at least one radio network controlling element (RNC; SRNC, CRNC, DRNC) of the radio access network (RAN), the control plane (CP) further being split in mobile control (MC) and area control (CC, RRM) functions, the method comprising the steps of:
- processing paging and broadcast (PB) functional tasks on the control plane (CP) of at least one of the radio network controlling elements (RNC, CRNC) resulting from the split,
- processing mobile control (MC) functional tasks on the control plane (CP) of at least one (SRNC) other of the radio network controlling elements resulting from the split,
- processing the paging and broadcast (PB) functional tasks in a first and a second logical block (PBCN, PBRAN), the first logical block (PBCN) performing paging tasks which are related to core network (CN) defined areas (LA, RA) and the second logical block (PBRAN) performing paging tasks for radio access network defined areas (CELL, URA).

2. The method as claimed in claim 1, the method further comprising the steps of :
- contacting the first logical block (PBCN) by the core network (CN) if the core network (CN) initiates a paging of a mobile terminal (UE), and
- further contacting the mobile control function (MC) by the first logical block (PBCN) if a paging is initiated for a mobile terminal being in a connected operating status.

3. The method as claimed in claim 1, the method further comprising the steps of :
- contacting the first logical block (PBCN) by the core network (CN) if the core network (CN) initiates a paging of a mobile terminal (UE), and
- further contacting the second logical block (PBRAN) by the mobile control function (MC) if a paging of a mobile terminal is initiated being in a connected but non-active operating status.

4. The method as claimed in claim 1, the method being applied to a cellular radio access network (RAN) having several radio cells, the method further comprising the step of contacting the second logical block (PBRAN) by said mobile control function (MC) if the paging of a radio cell is needed or if the paging of a radio access network registration area (URA) is needed which is covering a set of radio cells and which is defined by the radio access network (RAN).

5. The method as claimed in claim 1, the method further comprising the steps of:
- maintaining by the first functional block (PBCN) a context for mobile terminals (UE) being connected to radio resource controlling elements (RRC) of the radio access network (RAN), and
- maintaining no context for those mobile terminals which are in an idle mode operating status.

6. The method as claimed in claim 1, the method further comprising the steps of:
- checking if a context for the paged mobile terminal (UE) exists when a paging request arrives,
- reading a context to identify the mobile control function (MC) entity which is associated to said mobile terminal (UE),
- contacting said mobile control function (MC) if the said context exists.

7. The method as claimed in claim 6, the method further comprising the steps of:
- introducing into the second block (PB-CN) a reference index pointing to the mobile control function (MC) entity which is associated to said mobile terminal (UE), and
- allowing to reading a context for that mobile terminal in said mobile control function (MC) entity.

8. The method as claimed in claim 7, the method further comprising the step of updating said reference index for initialization during the initial radio resource control (RRC) connection setup between the MC and the UE, or when a relocation of the radio network controlling elements serving the UE has occurs.

9. The method as claimed in claim 6, the method further comprising the step of distributing by the first functional block (PBCN) the paging message to the cell control (CC) functional entities of that radio cells (cell in the CN related registration area, i.e. location area LA or routing area RA) onto whose paging control channel (PCCH) the message must be sent.

10. The method as claimed in claim 6, the method further comprising the step of sending from the mobile control function (MC) a paging message directly via a dedicated control channel (DCCH) to the mobile terminal (UE), if the mobile terminal (UE) is in a first state (CELL_DCH, CELL_FACH), said first state representing the fact that a dedicated control channel is active between the radio access network (RAN) and the mobile terminal (UE).

11. The method as claimed in claim 6, the method further comprising the step of forwarding by the mobile control function (MC) the paging request to the second functional block (PBRAN) for said mobile terminal (UE) together with the identification of the cell or URA where paging must be executed, if the mobile terminal (UE) is in a second state (Cell_PCH or URA_PCH)/ said second state representing the fact that a radio resource control (RRC) connection exists between the radio access network (RAN) and the mobile terminal (UE), the terminal making use of the paging channel as no active dedicated control channel exists.

12. The method as claimed in claim 8, the method further comprising the step of distributing by the second functional block (RBRAN) the paging message to the cell control (CC) functional entities of that at least one of the radio cells of the registration area (URA) onto whose paging control channel (PCCH) the message must be sent.

13. A set of network elements (MCS, ACS) being part of radio network controlling elements (RNC; SRNC, CRNC, DRNC) of a radio access network (RAN), wherein the user functions are split from the control functions by introducing a user plane (UP) and a control plane (CP) into the radio network controlling elements (RNCs), the set of network elements (MCS, ACS) operating on the control plane (CP) and comprising a mobile control server (MCS) having mobile control functions (MC) and an area control server (ACS) having paging and broadcast functions (PB) for supporting location management procedures, the paging and broadcast functions (PB) being split in a first and a second logical block (PBCN, PBRAN), the first logical block (PBCN) performing paging tasks which are related to core network (CN) defined areas (LA, RA) and the second logical block (PBRAN) performing paging tasks for radio access network defined areas (CELL, URA).

14. A radio access network (RAN) wherein the user functions are split from the control functions by introducing a user plane (UP) and a control plane (CP) into a radio network controlling elements (RNC; SRNC, CRNC, DRNC) comprising a set of network elements (MCS, ACS) operating on the control plane (CP) and comprising a mobile control server (MCS) having mobile control functions (MC) and an area control server (ACS) having paging and broadcast functions (PB) for supporting location management procedures, the paging and broadcast functions (PB) being split in a first and a second logical block (PBRAN, PBCN), the first logical block (PBCN) performing paging tasks which are related to core network (CN) defined areas (LA, RA) and the second logical block (PBRAN) performing paging tasks for radio access network defined areas (CELL, URA).
